# EUROPEAN PATENT APPLICATION

(11) **EP 2 374 752 A1**
(43) Date of publication of application: **12.10.2011**
(21) Application number: 09831855.3
(22) Date of filing: 03.12.2009
(51) Int. Cl.: C01B 7/04

(54) **METHOD FOR MANUFACTURING CHLORINE**

(30) Priority: 09.12.2008 JP 2008313585
(71) Applicant: Sumitomo Chemical Company, Limited, Tokyo 104-8260 (JP)
(72) Inventor: KINOSHITA, Masahiro, Niihama-shi Ehime 792-0025 (JP); OMOTO, Norihito, Niihama-shi Ehime 792-0025 (JP)
(74) Representative: Duckworth, Timothy John
(86) International application number: PCT/JP2009/070334
(87) International publication number: WO 2010/067751

(57) **Abstract**

An object of the present invention is to provide a novel method for producing chlorine with improved efficiency, which can remove impurities other than hydrogen chloride contained in a raw material gas and can recover unreacted hydrogen chloride after an oxidation reaction efficiently. The method of the present invention for producing chlorine includes an oxidation step of oxidizing hydrogen chloride in a raw material gas containing hydrogen chloride and impurities with oxygen, thereby obtaining a gas containing chlorine, and an absorption step of bringing the gas containing chlorine obtained in the oxidation step into contact with water or aqueous hydrochloric acid to form a solution containing hydrogen chloride and water as main components, thereby recovering unreacted hydrogen chloride and simultaneously obtaining a gas containing chlorine and oxygen as main components, wherein the above-mentioned raw material gas contains a gas obtained in at least one step of a first stripping step and a second stripping step, and the above-mentioned raw material gas passes through a step of removing moisture and a step of performing compression after at least one step of the first stripping step and the second stripping step and before being subjected to the oxidation step.

## Description

### TECHNICAL FIELD

The present invention relates to a method for producing chlorine.

### BACKGROUND ART

Chlorine is useful as a raw material of vinyl chloride, phosgene and so on, and it is well known that chlorine is obtained through the oxidation of hydrogen chloride in a raw material gas containing hydrogen chloride. For example, regarding a method including catalytically oxidizing hydrogen chloride with molecular oxygen using a catalyst to produce chlorine, a copper based catalyst, which is called a Deacon catalyst, is conventionally known to have a good catalytic activity, and many catalysts prepared by adding various compounds as third components to copper chloride and potassium chloride have been proposed. Besides such Deacon catalysts, methods using chromium oxides or other chromium compounds as a catalyst and methods using ruthenium oxides or other ruthenium compounds as a catalyst have also been proposed (International Publication No.04/037718 pamphlet (Patent Document 1)).

Here, a gas produced as a by-product in a heat decomposition reaction or a combustion reaction of a chlorine compound, a phosgenation reaction or a chlorination reaction of an organic compound, and so on is often used as a raw material gas containing hydrogen chloride. Such a raw material gas will contain impurities originating in the process of a generation source in addition to hydrogen chloride. For example, in the case of using, as a raw material gas, a gas containing hydrogen chloride generated from a step of making an amine of isocyanate and phosgene react with each other, impurities such as carbon monooxide, organic compounds including carbonyl sulfide, orthodichlorobenzene, and monochlorobenzene, and nitrogen will be contained in a raw material gas.

However, the impurities contained in a raw material gas are problematic in that they cause decrease in the activity of a catalyst, clogging of a pipe of a system of a generated gas treatment step after a reaction, accumulation in unreacted oxygen to be recycled, and so on.

In a method for producing chlorine, a gas containing chlorine obtained by oxidizing hydrogen chloride is brought into contact with water or aqueous hydrochloric acid, a gas containing chlorine and oxygen as main components is obtained by removing unreacted hydrogen chloride, and the gas is subjected to drying and then purification. In that case, it is general that the unreacted hydrogen chloride is used again as a raw material for the production of chlorine. In this case, unreacted hydrogen chloride is recovered in the form of a solution containing hydrogen chloride and water as main components (an aqueous hydrogen chloride solution) and then is subjected to recycling.

Generally, since an aqueous hydrogen chloride solution forms an azeotrope, it is difficult to separate it into hydrogen chloride and water, which are its constituents, and recover them by only simple distillation. As a method of separating and recovering hydrogen chloride and water from such an aqueous hydrogen chloride solution, a method including adding a strong electrolyte such as sulfuric acid or calcium chloride to an aqueous hydrogen chloride solution as a third component, and distilling the solution while changing an azeotropic state is known. As a concrete procedure, a solution is distilled as a first stage in a state where the activity of water in the solution is lowered by the addition of a strong electrolyte, thereby stripping a gas containing hydrogen chloride as a main component and recovering it. Then, as a second stage, the aqueous strong electrolyte solution resulting from the first step is distilled, so that water is distilled. The aqueous strong electrolyte solution condensed in the second stage can be reused as an additive in the first stage.

However, this method is problematic in that a third component must be added and that an expensive material is needed as an apparatus material. For example, in the case of adding sulfuric acid as a third component, the concentration of the sulfuric acid to be added in the first stage is preferably adjusted to at least 80% by weight for obtaining a sufficient effect to change an azeotropic state and preventing the flow rate of sulfuric acid condensed in the second stage from becoming excessively large before returning it to the first stage. However, if sulfuric acid with such a concentration is added, since the distillation in the first stage will be done in a state where hydrogen chloride, water, and sulfuric acid are present together and the boiling point of the solution will rise, it is difficult to use an inexpensive material such as resin-impregnated carbon, which is often used for distillation of an aqueous hydrogen chloride solution.

Although dehydration in the second step is generally carried out under reduced pressure because the operating temperature becomes a high temperature of 200°C or more under the atmospheric pressure, there is a limit in lowering the operating temperature by lowering the operating pressure in the dehydration step because it becomes difficult to condensate evaporated water if the operating pressure is lowered excessively. Thus, it is required to use an expensive corrosion-resistant material, such as tantalum, for an apparatus for dehydration. In the case of adding calcium chloride as a third component, attachment of scale due to deposition of a solid material may occur in the second step dehydration.

In view of the above-described problems, a method for producing chlorine including a step of post-stripping a solution obtained by making impurities contained in a raw material gas to be absorbed and a step of making a solution containing hydrogen chloride obtained after an oxidation reaction to be absorbed, followed by stripping has been investigated (Japanese Patent Laying-Open No. 2000-034105 (Patent Document 2), Japanese Patent Laying-Open No. 2001-139305 (Patent Document 3), Japanese Patent Laying-Open No. 2006-219369 (Patent Document 4), and so on). In this production method, the production efficiency of chlorine is increased by the execution of a stripping step derived from the raw material gas and a stripping step after the oxidation reaction using separate stripping towers.

### PRIOR ART DOCUMENTS

### PATENT DOCUMENTS

Patent Document 1 : International Publication No.04/037718 pamphlet
Patent Document 2 : Japanese Patent Laying-Open No. 2000-034105
Patent Document 3: Japanese Patent Laying-Open No. 2001-139305
Patent Document 4: Japanese Patent Laying-Open No. 2006-219369

### SUMMARY OF THE INVENTION

### PROBLEMS TO BE SOLVED BY THE INVENTION

Generally, in order to efficiently remove the heat of reaction in an oxidation reactor in a method for producing chlorine and to improve the performance of controlling a reaction temperature, it is necessary to increase the gas flow rate of a raw material gas at the time of supplying to the reactor. When the gas flow rate is increased like this, the loss of pressure in the reactor tends to increase and therefore it is necessary, for increasing the pressure in a reactor, to increase the gas pressure of a raw material gas at the time of supplying to the reactor. The oxidation reaction in a method for producing chlorine is an equilibrium reaction, and thus higher pressure in a reactor is more advantageous for production efficiency because high pressure will result in an increased chlorine concentration in an equilibrium composition. Therefore, it is necessary, for increasing the production efficiency, to supply a raw material gas into a reactor under higher pressure. In order to supply such a high pressure gas, however, it will become necessary to increase the operating pressure in a stripping step like that disclosed in Japanese Patent Laying-Open No. 2006-219369 (Patent Document 4). In this case, since the operating temperature in the stripping step becomes high, there is a problem that a very expensive material must be used as an apparatus for use in stripping and therefore a method for producing chlorine in further improved efficiency has been desired.

The present invention has been made in order to solve the above-described problems and an object thereof is to provide a novel method for producing chlorine with improved production efficiency, which can remove impurities other than hydrogen chloride contained in a raw material gas in a method for producing chlorine by oxidizing hydrogen chloride and further can recover unreacted hydrogen chloride after an oxidation reaction efficiently.

### MEANS FOR SOLVING THE PROBLEMS

The method of the present invention for producing chlorine includes an oxidation step of oxidizing hydrogen chloride in a raw material gas containing hydrogen chloride and impurities with oxygen, thereby obtaining a gas containing chlorine, and an absorption step of bringing the gas containing chlorine obtained in the oxidation step into contact with water or aqueous hydrochloric acid to form a solution containing hydrogen chloride and water as main components, thereby recovering unreacted hydrogen chloride and simultaneously obtaining a gas containing chlorine and oxygen as main components, wherein the raw material gas contains a gas obtained in at least one step of a first stripping step and a second stripping step, and the raw material gas passes through a step of removing moisture and a step of performing compression after at least one step of the first stripping step and the second stripping step and before being subjected to the oxidation step. The first stripping step is a step of obtaining a gas containing hydrogen chloride as a main component by stripping a solution obtained in a raw material gas absorption step of making a raw material gas to be absorbed in water or hydrochloric acid, thereby separating it into a solution containing hydrogen chloride and water as main components and a gas containing impurities as main components, and the second stripping step is a step of stripping the solution obtained in the absorption step, thereby obtaining a gas containing hydrogen chloride as a main component.

### EFFECTS OF THE INVENTION

Since the method of the present invention for producing chlorine passes through the moisture removal step and the compression step after the first stripping step or the second stripping step and before being subjected to the oxidation step, it becomes possible to perform the stripping in the first stripping step and/or the second stripping step under low pressure, and it is possible to lower the operation temperature, so that the degree of freedom of the material of the apparatus for performing the stripping increases and, therefore, it is possible to use an inexpensive apparatus. Since the pressure of the gas to be subjected to the oxidation step can be determined higher by a compressor using a common apparatus material, there is an advantage that the heat removal performance and the temperature control performance of a reactor to be used in the oxidation step are improved.

In the case of including the raw material gas absorption step and the first stripping step in the present invention, impurities contained in the raw material gas can be removed efficiently and thus a stable activity of a catalyst to be used in an oxidation step can be maintained and, as a result, chlorine can be obtained stably in a high yield. Moreover, in the case of including the raw material gas absorption step and the first stripping step, complicated separation of generated chlorine, unreacted oxygen, and a wide variety of impurities in a raw material gas can be simplified or omitted, and thus chlorine can be produced very easily in terms of a catalyst cost, a facility cost, and an operation cost.

In the case of including the second stripping step together with the above-mentioned absorption step in the method of the present invention for producing chlorine, an aqueous hydrogen chloride solution after an oxidation step, which is difficult to be separated and recovered, can be separated into hydrogen chloride and water and recovered efficiently without adding a third component. If the thus-obtained gas containing hydrogen chloride as a main component is subjected again to the oxidation step, it consequently becomes possible to produce chlorine more efficiently.

In the case of including the first stripping step and the second stripping step, it is necessary that a liquid to be treated is not present in the stripping tower to be used in the second stripping step at the start of the series of processes for the production of chlorine and a gas containing hydrogen chloride as a main component is generated in substantially only the stripping tower to be used in the first stripping step. Since the first stripping step and the second stripping step are performed separately without using the same equipment, the process can be started more easily as compared with the case of performing the first stripping step and the second stripping step using the same equipment. There is another advantage that it is possible to control the conditions of the first stripping step and the second stripping step separately depending upon the variation in the raw material gas flow rate, the variation in the reaction conversion rate in the oxidation step, and so on by performing the first stripping step and the second stripping step separately without using the same equipment, so that influence of a process variation is hardly exhibited.

### BRIEF DESCRIPTION OF THE DRAWINGS

Fig. 1 is a flow chart schematically showing a preferred example of the method of the present invention for producing chlorine and is a flow chart of a case including a first stripping step.
Fig. 2 is a flow chart schematically showing a preferred example of the method of the present invention for producing chlorine and is a flow chart of a case including a second stripping step.
Fig. 3 is a flow chart schematically showing a preferred example of the method of the present invention for producing chlorine and is a flow chart of a case including the first stripping step and the second stripping step.

### MODES FOR CARRYING OUT THE INVENTION

The present invention will be described more in detail below.

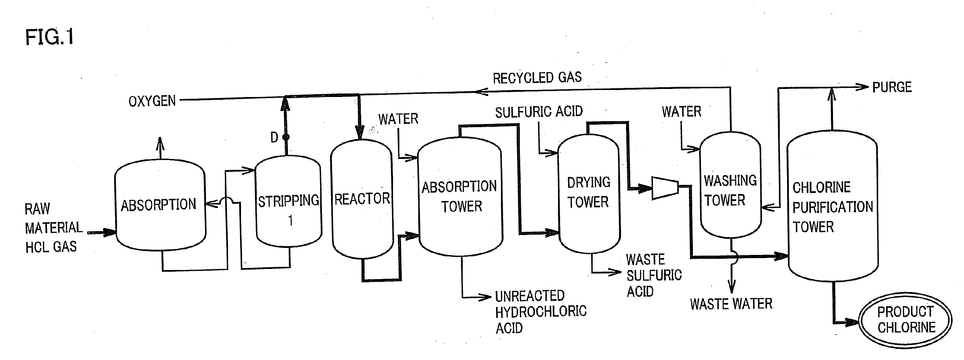

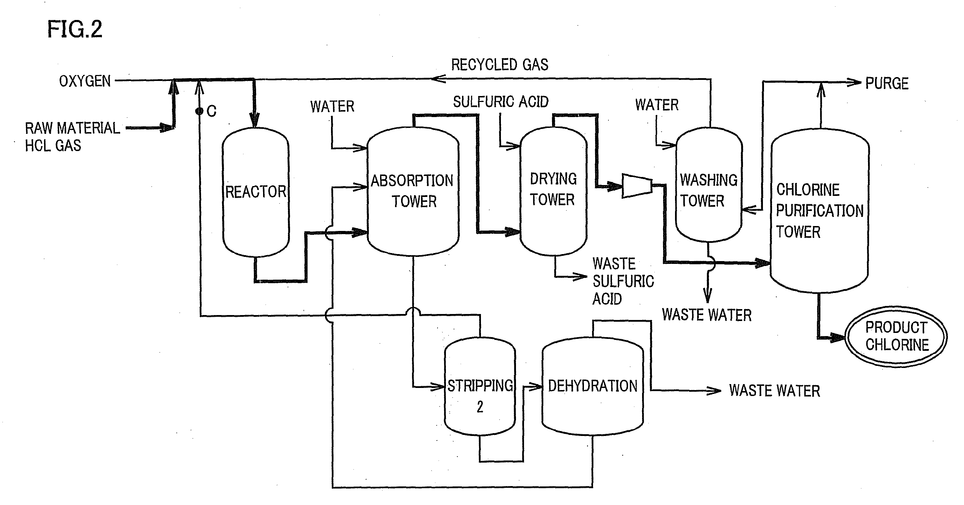

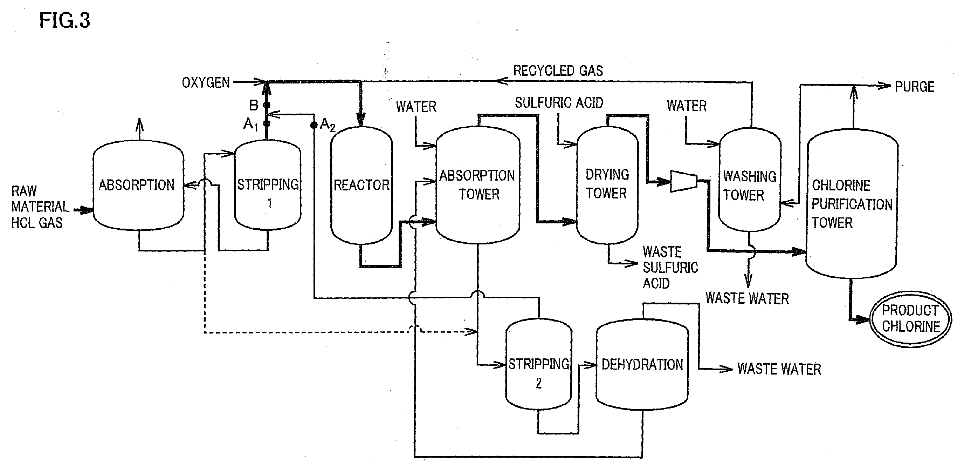

Fig, 1, Fig. 2, and Fig. 3 are flow charts schematically showing preferred examples of the method of the present invention for producing chlorine; Fig. 1 is a flow chart of a case including a first stripping step, Fig. 2 is a flow chart of a case including a second stripping step, and Fig. 3 is a flow chart of a case including the first stripping step and the second stripping step. The outline of the present invention is a method of oxidizing hydrogen chloride in a raw material gas containing hydrogen chloride and impurities with oxygen, thereby producing chlorine.

Here, as the raw material gas in the present invention can be used any gas containing hydrogen chloride generated in, for example, a thermal decomposition reaction or a combustion reaction of a chlorine compound, a phosgenation reaction or a chlorination reaction of an organic compound, and combustion in a combustion furnace.

It is preferable for the raw material gas in the present invention that the concentration of the hydrogen chloride in the raw material gas be 10% by volume or more, and a raw material gas having preferably 50% by volume or more, and more preferably 80% by volume or more is used. When the concentration of hydrogen chloride in the raw material gas is lower than 10% by volume, the amount of the hydrogen chloride to be removed together with impurities in the below-described raw material gas absorption step becomes large, so that it tends to become difficult to control the loss of hydrogen chloride to a small amount. When the concentration of the hydrogen chloride in the raw material gas is lower than 10% by volume, there is a fear that the concentration of the oxygen in a gas containing unreacted oxygen as a main component obtained in a purification step described below becomes low, so that the amount of the gas to be supplied to a reaction step in a circulation step described below must be reduced. The upper limit is not particularly limited with respect to the concentration of hydrogen chloride in the raw material gas and it usually may contain several percent by volume of impurities like those described below.

Examples of the impurities contained with hydrogen chloride in the raw material gas include chlorinated aromatic hydrocarbons, such as orthodichlorobenzene and monochlorobenzene, aromatic hydrocarbons, such as toluene and benzene, chlorinated hydrocarbons, such as methyl chloride and ethyl chloride, hydrocarbons, such as methane, acetylene, ethylene, and propylene, and inorganic gases, such as nitrogen, argon, carbon dioxide, carbon monoxide, phosgene, hydrogen, carbonyl sulfide, hydrogen sulfide, and sulfur dioxide.

The method of the present invention for producing chlorine has a feature of including at least [1] an oxidation step, [2] an absorption step, at least one step of [3] a first stripping step and [4] a second stripping step, [5] a step of removing moisture, and [6] a step of performing compression. Each step in the present invention will be described in detail below.

### [1] Oxidation step

The oxidation step in the present invention is a step of oxidizing hydrogen chloride in a raw material gas with oxygen, thereby obtaining a gas containing chlorine. Here, the raw material gas to be subjected to the oxidation step contains a gas obtained in at least one step of [3] a first stripping step and [4] a second stripping step, both described below.

While a gas containing oxygen is used for the oxidation of hydrogen chloride in the oxidation step, oxygen or air is used as the gas containing oxygen. Regarding the concentration of oxygen in the gas containing oxygen, a gas having a concentration of preferably 80% by volume or more, more preferably 90% by volume or more is used. When the concentration of oxygen is lower than 80% by volume in the above, there is a fear that the concentration of the oxygen in a gas containing unreacted oxygen as a main component obtained in a purification step described below becomes low, so that the amount of the gas to be subjected to the oxidation step in a circulation step described below must be reduced. The gas containing oxygen in an oxygen concentration of 80% by volume or more can be obtained by a usual industrial method such as an air pressure swing method or a supercold separation method. Examples of the component other than hydrogen chloride in the gas containing oxygen include nitrogen (N₂) and argon (Ar).

Although the theoretical molar amount of oxygen to 1 mol of hydrogen chloride in the oxidation of hydrogen chloride is 0.25 mol, it is known that a reaction advances more efficiently when oxygen is added to hydrogen chloride in excess of the stoichiometric ratio, and it is preferred to supply oxygen in a theoretical amount or more, and it is more preferable that the amount of oxygen to 1 mol of hydrogen chloride be 0.25 to 2 mol. If the amount of oxygen is excessively small, the conversion ratio of hydrogen chloride may become low, whereas if the amount of oxygen is excessively large, it may become difficult to separate generated chlorine from unreacted oxygen.

It is general that after the oxidation step unreacted oxygen is recycled to a reaction after being separated from chlorine. In the present invention, inert gases, such as nitrogen, argon, hydrogen, and carbon dioxide, also have been removed from the hydrogen chloride to be used for the oxidation reaction and generation of gas such as carbon dioxide due to combustion of carbon monoxide or an organic compound does not occur. Therefore, in the case of using oxygen excessively in accordance with stoicheometry relative to hydrogen chloride in an oxidation reaction, there are almost no impurities other than oxygen and chlorine in a gas after separating unreacted hydrogen chloride and generated water in the form of aqueous hydrochloric acid from a reaction gas, and separation and recycling of unreacted oxygen can be carried out very easily as compared with conventional technologies.

As a catalyst of the oxidation reaction in the oxidation step, conventional catalysts known as catalysts for oxidizing hydrogen chloride to produce chlorine can be used. Examples of such catalysts include catalysts resulting from the addition of various compounds as third components to copper chloride and potassium chloride, catalysts containing chromium oxide as a main component, and catalysts containing a ruthenium compound, such as metal ruthenium or ruthenium oxide, as a main component.

Among the above-mentioned catalysts, it is preferred in the present invention to use a catalyst in which a ruthenium compound such as metal ruthenium or ruthenium oxide has been carried on a metal oxide carrier. Influence of a catalyst poison can be reduced by using a catalyst in which a ruthenium compound such as metal ruthenium or ruthenium oxide has been carried on a metal oxide carrier while filling it in a fixed bed reactor. The use of a ruthenium compound such as metal ruthenium or ruthenium oxide avoids a problem of clogging of a pipe or the like caused by volatilization or scattering of a catalyst component, eliminates the necessity of a step of treating the volatilized or scattered catalyst component, and allows chlorine to be produced in equilibrium at an advantageous temperature. Hence, it is possible to simplify a step of recovering unreacted hydrogen chloride and water, a step of separating chlorine from unreacted oxygen, and a step of supplying unreacted oxygen to a reaction step, thereby saving a facility cost and an operation cost.

The content of the ruthenium compound such as metal ruthenium or ruthenium oxide in the catalyst is preferably from 0.1 to 20% by weight. This is because the conversion rate of hydrogen chloride tends to become low due to low catalytic activity if the content of the ruthenium compound such as metal ruthenium or ruthenium oxide in the catalyst is less than 0.1% by weight and also because the price of a catalyst tends to become high if the content of the ruthenium compound such as metal ruthenium or ruthenium oxide in the catalyst exceeds 20% by weight.

The particle diameter of the ruthenium compound such as metal ruthenium or ruthenium oxide is not particularly limited, but is preferably within a range of 1 nm to 10 nm. In the present invention, the above-mentioned particle diameter refers to, for example, the value measured by observation by means of an electron microscope.

Examples of the metal oxide carrier in the catalyst include carriers formed of metal oxides, such as γ-alumina, α-alumina, rutile type titania, anatase type titania, silica, and zirconia. Among them, the use of metal oxide carriers formed of γ-alumina, α-alumina, rutile type titania, and anatase type titania is preferred because their reaction activity is high and hardly lowers.

Specific examples of catalysts particularly suitable for the oxidation step in the present invention include, but are not limited to, a supported ruthenium oxide catalyst or a ruthenium oxide composite oxide type catalyst having a content of ruthenium oxide of from 1 to 20% by weight and a mean particle diameter of ruthenium oxide of from 1.0 nm to 10.0 nm, which is disclosed in Japanese Patent Laying-Open No. 10-338502.

As to the shape of the catalyst, the catalyst is used in a spherical form, a cylindrical pallet form, an extruded form, a ring form, a honeycomb form, or a granular form with a size as large as that obtained by pulverization and classification after molding. In this situation, the catalyst diameter is preferably 5 mm or less. The reason for this is that the catalytic activity may lower if the catalyst diameter exceeds 5 mm. The lower limit of the catalyst diameter is not particularly limited, but an excessively smaller catalyst diameter would lead to an increased pressure loss in a charged catalyst layer. Thus, a catalyst with a catalyst diameter of 0.5 mm or more is usually used. The term "catalyst diameter" used herein refers to a diameter of a sphere for a spherical form, a diameter of a cross section for a cylindrical pallet form, and a maximum diameter of a cross section for other forms.

A fixed bed gas phase circulating system using a fixed bed reactor is applied as the reaction system. As the fixed bed reactor in the present invention, a reactor in which temperature control of at least two reaction zones among all reaction zones is performed by a heat exchange system by, for example, the method disclosed in Japanese Patent Laying-Open No. 2000-272907 may be used. In such a reactor having a reaction zone divided into two zones, if two reaction zones of the first stage are prepared and the reactor is used while switching the first stage alternately before the second and higher stages are poisoned, the problem can be avoided practically. However, the preparation of two expensive reactors is disadvantaged in terms of cost.

One example of the fixed bed type reactor includes one or two or more fixed bed type reaction tubes linked in series having a jacket part outside the reaction tubes. The temperature in the reaction tube is controlled by a heat medium of the jacket part. The heat of reaction generated in the reaction can be recovered by generating steam through the heat medium. Examples of the heat medium include a molten salt, an organic heat medium, and molten metal, and the molten salt is preferred in terms of thermal stability, ease of handling, and so on. Examples of the composition of the molten salt include a mixture of 50% by weight of potassium nitrate and 50% by weight of sodium nitrite and a mixture of 53% by weight of potassium nitrate, 40% by weight of sodium nitrite, and 7% by weight of sodium nitrate. Examples of the material to be used for the reaction tube include metal, glass, and ceramics. Examples of the metallic material include Ni, SUS316L, SUS310, SUS304, Hastellay B, Hastelloy C, and Inconel. Among these, Ni is preferred and Ni having a carbon content of 0.02% by weight or less is particularly preferred.

While the reaction temperature of the oxidation reaction in the oxidation step is not particularly limited if it is within a temperature range usually chosen in an oxidation reaction bf hydrogen chloride, it is preferably within the range of 100°C to 500°C, and more preferably within the range of 200°C to 400°C. This is because if the reaction temperature is lower than 100°C, a required rate of reaction can not be obtained, so that there is a fear that the degree of reaction may become very low, and if the reaction temperature exceeds 500°C, there is a tendency that the activity of a catalyst falls due to sintering and volatilization of the catalyst. The reaction pressure of the oxidation reaction is preferably within the range of 0.1 MPa to 5 MPa so that the rate of reaction may be moderate and the facility cost may not become excessively high.

### [2] Absorption step

The absorption step in the present invention is a step of recovering unreacted hydrogen chloride from the gas containing chlorine obtained in the above-described oxidation step and obtaining a gas containing chlorine and oxygen as main components. The gas containing chlorine obtained in the oxidation step contains water, unreacted hydrogen chloride, unreacted oxygen, carbon dioxide, nitrogen, argon, and so on in addition to chlorine. In the absorption step, this gas containing chlorine is brought into contact with water or aqueous hydrochloric acid and, in some cases, is further cooled, so that unreacted hydrogen chloride is made to be absorbed in water or hydrochloric acid to form a solution containing hydrogen chloride and water as main components and thus a gas containing chlorine and oxygen as main components is separated. The present invention also includes an aspect in which the solution containing hydrogen chloride and water as main components obtained in the absorption step is subject to the second stripping step described below.

In the absorption step, the temperature at which the gas containing chlorine is brought into contact with water or hydrochloric acid is not particularly limited and is preferably from 0°C to 100°C from the viewpoint of failing to impair the absorptivity to water of hydrogen chloride and avoiding dissolution of gas components in an aqueous hydrochloric acid solution as much as possible. The pressure applied in the above-mentioned contact is 0.05 MPa to 1.0 MPa from the viewpoint of failing to impair the absorptivity to water of hydrogen chloride and avoiding dissolution of gas components in an aqueous hydrochloric acid solution as much as possible. In the absorption step, it is preferred to adopt the method disclosed in Japanese Patent Laying-Open No. 2003-261306 in order to prevent chlorine hydrates from precipitating.

### [3] First stripping step

In the present invention, the above-mentioned raw material gas may contain the gas obtained in the first stripping step as illustrated in Fig. 1. In the present invention, an aspect where the gas obtained in the first stripping step and the gas obtained in a second stripping step described below are mixed and then included in the above-mentioned raw material gas is also permitted (Fig. 3). The first stripping step is a step of obtaining a gas containing hydrogen chloride as a main component by stripping a solution obtained in a raw material gas absorption step of making a raw material gas to be absorbed in water or hydrochloric acid, thereby separating it into a solution containing hydrogen chloride and water as main components and a gas containing impurities as main components. The above-mentioned raw material gas absorption step is a step of making the hydrogen chloride in the raw material gas to be absorbed in water or hydrochloric acid, thereby separating it into a solution containing hydrogen chloride and water as main components and a gas containing impurities as main components. As a result of this raw material gas absorption step, inorganic gases slightly soluble in aqueous hydrochloric acid, such as carbonyl sulfide, carbon monoxide, carbon dioxide, phosgene, hydrogen, nitrogen, and argon, are removed effectively among impurities. The water and the hydrochloric acid for making the above-mentioned hydrogen chloride to be absorbed therein may be used after being mixed. Hereinafter the water or the hydrochloric acid to be used for absorbing the hydrogen chloride is referred to an absorber in some cases.

In the case of using hydrochloric acid for the raw material gas absorption step, unsaturated hydrochloric acid is used and the concentration thereof is not particularly limited if it is lower than the saturation concentration at a temperature and pressure at which the absorption is carried out, but it is preferably 25% by weight or less, more preferably 20% by weight or less of the whole absorber. The reason for this is that in the case of using hydrochloric acid with a concentration of 25% by weight or more, the absorption rate is so low that it tends to become difficult to make the hydrogen chloride contained in the raw material gas to be absorbed completely.

The absorption temperature in the raw material gas absorption step is not particularly limited, but is preferably from 0°C to 120°C and more preferably is from 35°C to 100°C. The reason for this is that if the absorption temperature is lower than 0°C, there is a fear of freezing and it is uneconomical because of a large amount of the heat removed and if the absorption temperature exceeds 120°C, hydrogen chloride is low in solubility in water, so that it tends not to be absorbed sufficiently.

The absorption pressure in the raw material gas absorption step is not particularly limited, but is preferably from 0.05 MPa to 1 MPa and more preferably is from 0.1 MPa to 0.5 MPa. The reason for this is that if the absorption pressure is lower than 0.05 MPa, hydrogen chloride is low in solubility in water, so that it tends not to be absorbed sufficiently, and if the absorption pressure exceeds 1 MPa, a high cost is needed for producing a pressure-resistant absorption apparatus to be used for the raw material gas absorption step. The absorption pressure as used in the present invention refers to the internal pressure of an absorption apparatus to be used for a raw material gas absorption step.

The absorption of hydrogen chloride in the raw material gas absorption step has a feature that an operation can be done at a low temperature and low pressure, so that an inexpensive, acid-resistant material can be used, and it is possible to more selectively remove such compounds as carbonyl sulfide, which are difficult to be removed completely by such methods as liquefaction and reevaporation or adsorption of hydrogen chloride because of having a boiling point close to that of hydrogen chloride.

The above-mentioned first stripping step is a step of stripping the solution obtained in the raw material gas absorption step, thereby obtaining a gas containing hydrogen chloride as a main component. Specifically, water containing hydrogen chloride or a solution of hydrochloric acid is stripped in a known stripping tower, so that a gas containing hydrogen chloride as a main component is taken out as a stripping gas from the tower top and a solution after the separation of the hydrogen chloride is taken out as a bottoms product from the tower bottom.

The stripping pressure in the first stripping step is not particularly limited, but is preferably adjusted to 0.03 to 1 MPa and more preferably 0.1 to 0.35 MPa. The reason for this is that if the stripping pressure is lower than 0.03 MPa, a problem that hydrogen chloride gas after being stripped cannot be supplied to the following reaction step may occur and if the stripping pressure exceeds 1 MPa, a high cost is needed for producing a pressure-resistant stripping tower to be used for the first stripping step. Examples of the lining material of the inner wall of the stripping tower strong enough to stand such stripping pressure include a lining constituted of tantalum. Since the below-described step of performing compression is provided in the present invention, it becomes possible to adjust the stripping pressure in the first stripping step to 0.35 MPa or lower. This case is preferred because it becomes possible to apply a lining constituted of an inexpensive resin material as the inner wall material of the stripping tower since the stripping temperature (the temperature at the tower bottom of the stripping tower) in the first stripping step can be adjusted to lower than before, for example, 100°C to 140°C. A material that is corrosion-resistant to a solution containing hydrogen chloride and water under operating conditions, for example, resin-impregnated carbon or fluorinated ethylene based resin can be used as the above-mentioned resin material, and in the case of using polytetrafluoroethylene, the stripping temperature can be adjusted to 140°C.

In the first stripping step, it is possible to recover a gas containing hydrogen chloride as a main component having a concentration of hydrogen chloride except for moisture of preferably 95% by volume or more, more preferably 98% by volume or more, and particularly preferably 99% by volume or more. In the present invention, the thus-obtained gas containing hydrogen chloride as a main component is contained in the raw material gas in the above-described oxidation step in some cases.

Here, hydrogen chloride and water form a maximum azeotrope in the first stripping step (that is, azeotropy occurs at a temperature higher than the boiling points of hydrogen chloride and water). For this reason, although hydrogen chloride remains in the bottoms product, the bottoms product can be recycled partially or wholly as an absorbent liquid of the raw material gas absorption step. This makes it possible to make the loss of hydrogen chloride in the raw material gas absorption step and the first stripping step very small. Similarly, it is also possible to recycle the bottoms product partially or wholly as an absorbent liquid of the absorption step.

While the hydrochloric acid concentration of the bottoms product may be any concentration as long as it is higher than the hydrochloric acid concentration of the maximum azeotrope of hydrogen chloride and water under the operating pressure and it is not higher than the hydrochloric acid concentration of the solution obtained in the raw material gas absorption step, it is preferred that the concentration be close to the hydrochloric acid concentration of the maximum azeotrope in order to recover hydrogen chloride in the stripping gas as much as possible.

The structure of the stripping tower to be used in the first stripping step may be a structure having only a heater capable of giving heat necessary for stripping. In order to recover much hydrogen chloride in the solution obtained in the raw material gas absorption step, however, it is preferred to make the hydrochloric acid concentration in the bottoms product as low as possible in a range where it exceeds the maximum azeotropic composition under the operation pressure. On the other hand, the lower the concentration of the moisture contained in the obtained stripping gas, the less the energy to be used and the less the amount of concentrated sulfuric acid to be used in the case of passing through drying with concentrated sulfuric acid before being subjected to the above-mentioned oxidation step. Therefore, it is preferred to provide a tower having one or more theoretical plates, more preferably three theoretical plates to nine theoretical plates, on a heater (reboiler) so that the difference between the hydrogen chloride concentration in the stripping gas and the hydrochloric acid concentration in the bottoms product may be enlarged. Steam is preferably used as the heat source of the stripping tower.

Examples of the structure of the stripping tower to be used in the first stripping step include a packed tower and a shelf plate tower. Moreover, the stripping tower may be provided with incidental devices, such as a reboiler, and in this case, materials having corrosion-resistance to a solution containing hydrogen chloride and water under operating conditions (for example, resin-impregnated carbon, fluorinated ethylene-based resin, metal having an inside lined or coated with fluorinated ethylene-based resin, tantalum or tantalum alloy, and metal having an inside lined or coated with tantalum or tantalum alloy) are used preferably as the apparatus material of the incidental devices. In the method of the present invention for producing chlorine, since the stripping temperature and the stripping pressure can be made low, it is possible to apply a lining constituted of a resin material as the inner wall material of a stripping tower or an incidental device. A material that is corrosion-resistant to a solution containing hydrogen chloride and water under operating conditions, for example, resin-impregnated carbon and fluorinated ethylene based resin such as tetrafluoroethylene can be used as the resin material.

In the present invention, the heat of dissolution accompanying the absorption of hydrogen chloride in the above-mentioned raw material absorption step can be utilized effectively as a heat source for preheating a solution before being subjected to the first stripping step. Moreover, heat can be recovered also from the bottoms product after stripping.

### [4] Second stripping step

In the present invention, the above-mentioned raw material gas may contain the gas obtained in the second stripping step as illustrated in Fig. 2. In the present invention, an aspect where the gas obtained in the second stripping step and the gas obtained in the aforementioned first stripping step are mixed and then included in the above-mentioned raw material gas as illustrated in Fig. 3 is also permitted.

The second stripping step in the present invention is a step of stripping the solution containing hydrogen chloride and water obtained in the above-mentioned absorption step, thereby obtaining a gas containing hydrogen chloride as a main component. When the above-described first stripping step is included, a solution containing hydrogen chloride and water obtained in the above-described absorption step separately from the first stripping step is stripped.

The solution containing hydrogen chloride and water stripped in the second stripping step usually contains hydrogen chloride more than the azeotropic composition of hydrogen chloride and water under the pressure in the second stripping step. The composition of such a solution containing hydrogen chloride and water usually contains 25% by weight to 40% by weight of hydrogen chloride and 60% by weight to 75% by weight of water.

When the second stripping step is followed by a moisture removal step described below, the pressure in the second stripping step (the pressure at the tower top of the stripping tower) is preferably selected to be pressure higher than the pressure in the moisture removal step and it is usually from 0.03 MPa to 1.0 MPa. In the present invention, however, since a compression step is provided after the moisture removal step, the upper limit of the stripping pressure in the second stripping step can be adjusted to 0.35 MPa or lower like the stripping pressure in the first stripping step.

While the temperature in the second stripping step (the temperature at the tower bottom of the stripping tower) is determined depending upon the above-mentioned pressure and the composition of the solution containing hydrogen chloride and water to be subjected to the stripping in the second stripping step, it is usually from 100°C to 180°C, and the upper limit can be adjusted to 140°C because of passing through the moisture removal step and the compression step. Steam is preferably used as the heat source of the stripping tower.

In the method of the present invention for producing chlorine, the stripping in the second stripping step is performed separately from the first stripping step described above, in other words, using separate facilities (separate stripping towers).

Examples of the structure of the stripping tower to be used in the second stripping step include a packed tower and a shelf plate tower. Moreover, the stripping tower may be provided with incidental devices, such as a reboiler, and in this case, materials having corrosion-resistance to a solution containing hydrogen chloride and water under operating conditions (for example, resin-impregnated carbon, fluorinated ethylene-based resin, metal having an inside lined or coated with fluorinated ethylene-based resin, tantalum or tantalum alloy, and metal having an inside lined or coated with tantalum or tantalum alloy) are used preferably as the apparatus material of the stripping tower and the incidental devices. In the present invention, since the stripping temperature and the stripping pressure can be made low, it is possible to apply a lining constituted of a resin material as the inner wall material of a stripping tower or an incidental device as in the first stripping step. A material that is corrosion-resistant to a solution containing hydrogen chloride and water under operating conditions, for example, resin-impregnated carbon and fluorinated ethylene based resin such as tetrafluoroethylene can be used as the resin material.

In the second stripping step, a gas containing high-concentration hydrogen chloride as a main component is obtained from the top of the stripping tower. After passing through the moisture removal step and the compression step or after passing through the moisture removal step and the compression step and then being mixed with the gas obtained in the first stripping step having passed through the moisture removal step and the compression step as described above, the thus-obtained gas containing hydrogen chloride as a main component is subjected to the oxidation step. Alternatively, the gas is mixed with the gas containing hydrogen chloride as a main component obtained in the first stripping step and then is subjected to an oxidation step through a moisture removal step and a compression step. While the gas containing hydrogen chloride as a main component obtained in the second stripping step contains some water, it is also possible to reduce the amount of the moisture contained in the gas by the addition of a dephlegmating operation that includes cooling the gas and returning a condensed aqueous hydrogen chloride solution to the stripping tower.

In the second stripping step, the aqueous hydrochloric acid recovered from the bottom of the stripping tower can be partially or wholly recycled as an absorbent liquid of a raw material gas absorption step or an absorption step.

### [5] Step of removing moisture

In the present invention, the raw material gas passes through a step of removing moisture (a moisture removal step) after at least one step of the first stripping step and the second stripping step and before being subjected to the oxidation step. That is, the method of the present invention for producing chlorine includes a moisture removal step after the first stripping step when the method includes the first stripping step, or after the second stripping step when the method includes the second stripping step, or after the first and second stripping steps when the method includes these stripping steps.

While it is generally preferred that the raw material gas to be subjected to the oxidation step be supplied at high pressure in the method of the present invention for producing chlorine, the supply of the raw material gas at such high pressure requires increased stripping pressure in the stripping step. In order to increase the stripping pressure of the raw material gas, however, an expensive material such as tantalum must be applied as an apparatus material because the inside of the stripping tower reaches high temperature conditions. In this respect, the present invention makes it possible to extend the range of selection of the apparatus material in the stripping step as described above by making the stripping pressure in the stripping step as low as possible and by increasing the pressure of the gas to supply to the oxidation step by inclusion of a step of performing compression separately described below. However, since moisture is contained in the stripping gas obtained in the above-described stripping step, it is necessary, for preventing the corrosion of an apparatus in the step of performing compression, to use an expensive material and the effect of the apparatus material in the stripping step may not be exhibited sufficiently. In view of this problem, the present invention includes a moisture removal step after at least one of the first stripping step and the second stripping step.

The above-mentioned moisture removal step is a step of performing the removal of the moisture contained in the gas obtained in the first stripping step or the second stripping step. In the moisture removal step, a dry gas can be obtained by, for example, a supercooling condensation method including cooling the gas obtained in the first stripping step or the second stripping step to, for example, -70°C to 40°C, thereby condensing the water and the hydrogen chloride in the gas partially to reduce the concentration of the water in the gas, or a method including further bringing the gas obtained in the first stripping step or the second stripping step or an uncondensed gas resulting from cooling the gas into contact with a compound such as sulfuric acid (or concentrated sulfuric acid), calcium chloride, magnesium perchlorate, or zeolite, thereby removing moisture. Such a moisture removal step can be carried out under a pressure of from 0.03 MPa to 1 MPa. The amount of moisture in the above-mentioned dry gas is preferably 0.5 mg/L or less and more preferably 0.1 mg/L or less.

In the case of obtaining a dry gas by the method of bringing the gas into contact with the above-mentioned compound to remove moisture, sulfuric acid (or concentrated sulfuric acid) is preferred among compounds that remove the moisture in the gas because it can be discharged easily after use. The concentration of the sulfuric acid to be used is preferably 90% by weight or more. If the sulfuric acid concentration is lower than 90% by weight, the moisture in the gas may not be removed sufficiently. The contact is performed at a temperature of from 0°C to 80°C and under a pressure of from 0.05 MPa to 1 MPa. In the case of using sulfuric acid as a drying agent, it is preferred to remove sulfuric acid mist, which is described below, just after the drying step.

When sulfuric acid mist is contained in the obtained dry gas in the method of bringing the gas into contact with concentrated sulfuric acid to remove moisture, the sulfuric acid mist can be removed by providing a step of further bringing the dry gas into contact with an organic solvent. Examples of the above-mentioned organic solvent include aromatic hydrocarbons such as toluene and benzene and chlorinated aromatic hydrocarbons such as monochlorobenzene and orthodichlorobenzene. The contact of the dry gas with an organic solvent can be carried out by, for example, a method using a known packed tower, a shelf plate tower, a bubbling tower, or the like. Besides the above-mentioned organic solvent, sulfuric acid mist can also be removed by collecting it with a known mist removing material such as a filter or a cyclone.

### [6] Step of compression

In the present invention, the gas obtained in the first stripping step or the second stripping step passes through a step of performing compression (a compression step) after [5] the step of removing moisture and before the oxidation step. The compression step is a step of making the pressure of the gas obtained in the first stripping step or the second stripping step higher than the stripping pressure.

Here, in the case of applying the gas obtained in the stripping step as it is as a gas to be subjected to the compression step, since the gas obtained in the stripping step is a hydrogen chloride gas containing moisture and it forms aqueous hydrochloric acid, exhibiting high corrosivity at a temperature equal to or lower than its dew point, an expensive material such as tantalum is needed as a compressor for compressing such a hydrogen chloride gas containing moisture. It, however, is not realistic to manufacture, by using an expensive material, a compressor that needs mechanical strength and that has a complicated apparatus structure.

In the present invention, by using the gas obtained in the first stripping step or the second stripping step and resulting from the removal of moisture in the moisture removal step for the compression step, common metallic materials, such as carbon steel and stainless steel, can be applied as a compressor to be used for the compression step. In the present invention, the pressure of the gas to be subjected to the oxidation step can be adjusted to high pressure with such an inexpensive apparatus configuration and, as a result, the efficiency of the production method as a whole can be improved.

In the above-mentioned compression step, the pressure of the dry gas having passed through the moisture removal step is increased so that the pressure at normal temperature (25°C) may become pressure higher than the stripping pressure, for example, 0.35 MPa to 5 MPa. Such an increase in pressure can be performed by using a known compressor and examples thereof include turbo compressors, such as a centrifugal compressor and volume compressors, such as a reciprocating compressor and a rotary compressor. By providing such a compression step, it becomes possible to adjust the stripping pressures in the first stripping step and the second stripping step to 0.35 MPa or lower.

In the case of including the first stripping step as illustrated in Fig. 1, [5] the step of removing moisture and [6] the step of performing compression in the method of the present invention for producing chlorine can be performed at the position indicated by D in Fig. 1 to the gas obtained in the first stripping gas. In the case of including the second stripping step as illustrated in Fig. 2, each of the moisture removal step and the step of performing compression can be carried out at the position indicated by C in Fig. 2 and it also may be subjected to the oxidation step after being mixed with a raw material gas. Moreover, in the case of including the first stripping step and the second stripping step as illustrated in Fig. 3, it is permissible that the moisture removal step and the compression step are performed for each of the gas obtained in the first stripping step at the position indicated by A1 in Fig. 3 and the gas obtained in the second stripping step at the position indicated by A2 in Fig. 3 and then they are subjected to the oxidation step after being mixed together. Alternatively, it is also permissible that the gases obtained in the first stripping step and the second stripping step at the position indicated by B in Fig. 3 are mixed together and the resulting mixed gas is then subjected to the moisture removal step and the compression step and subsequently to the oxidation step.

By including at least [1] an oxidation step, [2] an absorption step, at least one of [3] a first stripping step and [4] a second stripping step, [5] a step of removing moisture, and [6] a step of performing compression, the method of the present invention for producing chlorine can remove impurities other than hydrogen chloride in a raw material gas and further efficiently recover unreacted hydrogen chloride after an oxidation reaction.

In the case of including the raw material gas absorption step and the first stripping step in the present invention, impurities contained in the raw material gas can be removed efficiently and thus a stable activity of a catalyst to be used in the oxidation step can be maintained and, as a result, chlorine can be obtained stably in a high yield. Moreover, in the case of including the raw material gas absorption step and the first stripping step, complicated separation of generated chlorine, unreacted oxygen, and a wide variety of impurities in a raw material gas can be simplified or omitted, and thus chlorine can be produced very easily in terms of a catalyst cost, a facility cost, and an operation cost.

In the case of including the second stripping step together with the above-mentioned absorption step in the method of the present invention for producing chlorine, an aqueous hydrogen chloride solution after the oxidation step, which is difficult to be separated and recovered, can be separated into hydrogen chloride and water and recovered efficiently without adding a third component. If the thus-obtained gas containing hydrogen chloride as a main component is subjected again to the oxidation step, it consequently becomes possible to produce chlorine more efficiently.

In the case of including the first stripping step and the second stripping step, it is necessary that a liquid to be treated is not present in the stripping tower to be used in the second stripping step at the start of the series of processes for the production of chlorine and a gas containing hydrogen chloride as a main component is generated in substantially only the stripping tower to be used in the first stripping step. Since the first stripping step and the second stripping step are performed separately without using the same equipment, the process can be started more easily as compared with the case of performing the first stripping step and the second stripping step using the same equipment. There is another advantage that it is possible to control the conditions of the first stripping step and the second stripping step separately depending upon the variation in the raw material gas flow rate, the variation in the reaction conversion rate in the oxidation step, and so on by performing the first stripping step and the second stripping step separately without using the same equipment, so that influence of a process variation is hardly exhibited.

Since the method of the present invention for producing chlorine passes through the moisture removal step and the compression step after the first stripping step or the second stripping step and before being subjected to the oxidation step, it becomes possible to perform the stripping in the first stripping step and/or the second stripping step under low pressure, and it is possible to lower the operation temperature, so that the degree of freedom of the material of the apparatus for performing the stripping increases and, therefore, it is possible to use an inexpensive apparatus. Since the pressure of the gas to be subjected to the oxidation step can be determined higher by a compressor using a common apparatus material, there is an advantage that the heat removal performance and the temperature control performance of a reactor to be used in the oxidation step are improved.

### [7] Dehydration step

In the method of the present invention for producing chlorine, it is preferable to subject an aqueous hydrogen chloride solution after separating the gas containing hydrogen chloride as a main component in the second stripping step to [7] the dehydration step, separate it into hydrochloric acid and waste water, and recycle the recovered hydrochloric acid to the above-mentioned absorption step.

In the dehydration step, a stripping tower different from the different towers used respectively in the first stripping step and the second stripping step is used and the aqueous hydrogen chloride solution obtained in the second stripping step is stripped under pressure lower than that of the second stripping step. The aqueous hydrogen chloride solution contains water more than an azeotropic composition of hydrogen chloride and water under the pressure in the dehydration step. In this dehydration step, the above-mentioned aqueous hydrogen chloride solution is stripped, so that water is recovered from the top of the stripping tower and hydrochloric acid separated from water is recovered from the bottom of the stripping tower.

The pressure in the dehydration step may be set to be lower than the pressure in the above-mentioned second stripping step and is not particularly limited, but is preferably from 0.005 MPa to 0.05 MPa. The temperature in the dehydration step is determined appropriately depending upon the above-mentioned pressure and the composition of an aqueous hydrogen chloride solution to be subjected to stripping, but is usually from 50°C to 90°C. Since this temperature is lower than the temperature of the dehydration step in the case of adding a strong electrolyte, such as sulfuric acid, as a third component, the heat source to be used can be selected from a wider range, and the apparatus material of a device also can be selected from a wide range and relatively inexpensive materials, such as glass lining and glass fiber-containing resin, can be used. Steam is preferably used as the heat source.

The system of a stripping tower to be used in the dehydration step is not particularly restricted and examples thereof include a packed tower and a shelf plate tower, and preferred is a system in which a condensation section is provided above a raw material feeding stage and the whole portion of a gas fed from the tower top is condensed and the condensed liquid is partially returned to the tower top so that water can be condensed efficiently in the tower top side.

The composition of the aqueous hydrogen chloride solution to be subjected to the dehydration step usually contains 15% by weight to 21% by weight of hydrogen chloride and 79% by weight to 85% by weight of water. Generally, the relative volatility of water to hydrogen chloride is large in the side where the concentration of water is higher than the azeotropic composition of hydrogen chloride and water, and therefore water of a high concentration can be easily separated and recovered from the tower top.

The method of the present invention for producing chlorine may, of course, include any known appropriate step commonly included in a method for producing chlorine, such as [8] a drying step, [9] a purification step, [10] a circulation step, and [11] an abatement step, in addition to the aforementioned steps [1] to [6] and [7] the dehydration step. Each of these steps is described below.

### [8] Drying step

The drying step is a step of removing the moisture contained in the gas containing chlorine and unreacted oxygen as main components obtained in the above-mentioned absorption step, thereby obtaining a dry gas. The amount of the moisture in the gas after the drying step is 0.5 mg/L or less and preferably is 0.1 mg/L or less. While examples of the compound that removes the moisture in the gas include sulfuric acid, calcium chloride, magnesium perchlorate, and zeolite, sulfuric acid is preferred particularly because its discharge after its use is easy. Examples of the method of removing the moisture contained in the gas include a method of bringing the gas containing chlorine and unreacted oxygen as main components obtained in the above-described absorption step into contact with sulfuric acid.

The concentration of the sulfuric acid to be used in the drying step is preferably 90% by weight or more. If the sulfuric acid concentration is lower than 90% by weight, the moisture in the gas may not be removed sufficiently. The contact is performed at a temperature of from 0°C to 80°C and under a pressure of from 0.05 MPa to 1 MPa. When using sulfuric acid as a drying agent, it is preferred to remove sulfuric acid mist just after the drying step. For example, a Brink eliminator or the method described in Japanese Patent Laying-Open No. 2003-181235 can be applied.

### [9] Purification step

The purification step is a step of obtaining chlorine by separating the dried gas obtained in the aforementioned drying step into a liquid or gas containing chlorine as a main component and a gas containing unreacted oxygen as a main component. Examples of the method of separation into a liquid or gas containing chlorine as a main component, and a gas containing unreacted oxygen as a main component, include a method of compressing and/or cooling, and/or known methods (Japanese Patent Laying-Open No. 3-262514, National Patent Publication No. 11-500954). For example, a liquid containing chlorine as a main component is separated from a gas containing unreacted oxygen as a main component by compressing and/or cooling the gas obtained in the drying step. Liquefaction of chlorine is carried out within a range defined by pressure and temperature where chlorine can exist in a liquid state. Although if the temperature is lowered more and more within the range, the compression pressure becomes lower and it is possible to reduce the compression power, the compression pressure and the cooling temperature are determined in consideration of the optimum economic condition within this range industrially in view of problems with facilities and so on. In a usual operation, the liquefaction of chlorine is carried out under a compression pressure of 0.5 MPa to 5 MPa at a cooling temperature of -70°C to 40°C.

The resulting liquid containing chlorine as a main component can be used, as it is or after being vaporized partially or wholly, as a raw material of vinyl chloride, phosgene, and so on. In the case of using the liquid after vaporizing it partially or wholly, it is possible to obtain part of the heat necessary for the vaporization simultaneously reduce a cooling load due to an external cooling medium necessary for the liquefication of chlorine in the gas obtained in the drying step by performing heat exchange of the gas obtained in the drying step. Similarly, it can be used for precooling of liquid chlorofluorocarbons or cooling the reflux liquid of a chlorine distilling tower and so on.

### [10] Circulation step

The circulation step is a step of supplying the gas containing unreacted oxygen as a main component obtained in the above-described purification step partially or wholly to the oxidation step. In the production method of the present invention, when circulating a gas containing unreacted oxygen as a main component to a reaction step, sulfuric acid mist is removed by, for example, washing the gas with water. It is preferred to adjust the sulfur component concentration at the inlet of the reactor to 1000 volppb or less by such an operation.

### [11] Abatement step

The abatement step is a step of discharging the gas containing unreacted oxygen as a main component obtained in the above-described purification step or the gas not having been supplied to the oxidation step in the above-described circulation step out of the system after removing chlorine contained in the gas. Examples of the method of abating chlorine include a method of performing abatement by bringing a gas into contact with an aqueous solution of an alkali metal hydroxide, or an aqueous solution of alkali metal thiosulfate, or an aqueous solution in which an alkali metal sulfite and alkali metal carbonate have been dissolved, or an aqueous solution in which an alkali metal sulfite and alkali metal carbonate have been dissolved, and known methods of separating and recovering chlorine in a gas (Japanese Patent Laying-Open No. 3-262514, Japanese Patent Laying-Open No. 10-25102, and National Patent Publication No. 11-500954).

The method of the present invention for producing chlorine is not accompanied by a problem of clogging of a pipe or the like caused by volatilization or scattering of a catalyst component and does not need a treating step due to preferred inclusion of all of the above-described steps, and can produce chlorine in equilibrium at an advantageous temperature by the use of a highly active catalyst. It therefore can simplify a step of recovering unreacted hydrogen chloride and water, a step of separating chlorine from unreacted oxygen, and a step of supplying unreacted oxygen to an oxidation reaction and thus can realize a method for producing chlorine excellent particularly in terms of a facility cost and an operation cost.

Although the embodiments of the present invention have been described above, appropriate combinations of the configurations of the embodiments provided above have also been intended from the beginning.

It should be understood that the embodiments disclosed herein are non-limiting and only illustrative. It is intended that the scope of the present invention is not shown by the description above but is shown by the claims, and includes the claims, the meanings of equivalence and all modifications within the range.

## Claims

1. A method for producing chlorine comprising:
an oxidation step of oxidizing hydrogen chloride in a raw material gas containing hydrogen chloride and impurities with oxygen, thereby obtaining a gas containing chlorine, and
an absorption step of bringing the gas containing chlorine obtained in said oxidation step into contact with water or aqueous hydrochloric acid to form a solution containing hydrogen chloride and water as main components, thereby recovering unreacted hydrogen chloride and simultaneously obtaining a gas containing chlorine and oxygen as main components, wherein
said raw material gas contains a gas obtained in at least one step of a first stripping step and a second stripping step,
said first stripping step is a step of obtaining a gas containing hydrogen chloride as a main component by stripping a solution obtained in a raw material gas absorption step of making a raw material gas to be absorbed in water or hydrochloric acid, thereby separating it into a solution containing hydrogen chloride and water as main components and a gas containing impurities as main components,
said second stripping step is a step of stripping the solution obtained in said absorption step, thereby obtaining a gas containing hydrogen chloride as a main component, and
said raw material gas passes through a step of removing moisture and a step of performing compression after at least one step of said first stripping step and said second stripping step and before being subjected to said oxidation step.

2. The method for producing chlorine according to claim 1, wherein said step of removing moisture is a step of removing moisture by performing contact with concentrated sulfuric acid, thereby obtaining a dry gas.

3. The method for producing chlorine according to claim 2, wherein said step of removing moisture further comprises a step of bringing the dry gas into contact with an organic solvent.

4. The method for producing chlorine according to claim 1, wherein said first stripping step and said second stripping step are each carried out in a stripping tower,
said stripping tower has an inner wall constituted of a resin material and has an internal pressure of 0.35 MPa or lower.

5. The method for producing chlorine according to claim 1, wherein a catalyst containing metal ruthenium or a ruthenium compound is used for the oxidation in said oxidation step.
